Europäisches Patentamt

European Patent Office

Office européen des brevets

(19)

(11) Publication number: **0 320 473**
A1

# (12) EUROPEAN PATENT APPLICATION

(21) Application number: 88850359.6

(22) Date of filing: 24.10.88

(51) Int. Cl.⁴: **C 08 J 9/32**
B 01 J 13/02, C 08 J 9/22

(30) Priority: 09.11.87 SE 8704389

(43) Date of publication of application:
14.06.89 Bulletin 89/24

(84) Designated Contracting States:
AT BE CH DE FR GB IT LI NL SE

(71) Applicant: CASCO NOBEL AB
Box 11550
S-100 61 Stockholm (SE)

(72) Inventor: Bjerke, Odd
Linjevägen 15
S-852 59 Sundsvall (SE)

(74) Representative: Schöld, Zaid
Nobel Industries Sweden AB Patent Department Box
11554
S-100 61 Stockholm (SE)

(54) A process for drying and expanding thermoplastic microspheres.

(57) The invention relates to a process for drying and expanding expandable thermoplastic microspheres by finely dividing a water suspension of unexpanded micro spheres into small droplets in a drying/expansion plant. A flow of hot air, which has a sufficiently high temperature for drying and expanding the microspheres, is brought to the plant. The content of water vapour in the drying/expansion plant is increased by external addition of water vapour. Preferably, the content of water vapour in the plant is increased to a value exceeding the limit value at which dust explosion occurs. The content of water vapour can be increased by recirculation of a part of the outgoing drying air.

EP 0 320 473 A1

## Description

## A process for drying and expanding thermoplastic microspheres

The present invention relates to a process for drying and expanding thermoplastic microspheres. More particularly the invention relates to a method for avoiding dust explosion in the drier when drying and expanding unexpanded thermoplastic microspheres.

Expandable microspheres, their production and use are disclosed in U.S. Pat. No. 3,615,972. The thermoplastic shell of these particles can for example consist of polymers or copolymers formed from monomers such as vinyl chloride, vinylidene chloride, acrylonitrile, methacrylate or styrene. The particle size of the unexpanded spheres, and thus also of the expanded spheres, can vary within wide limits and is selected with respect to the desired properties of the finished product. Particle sizes for unexpanded spheres can for example be 1 μm to 1 mm, preferably 2 μm to 0.5 mm and particularly 5 μm to 50 μm. The diameter of the particles increases at expansion by a factor 2 to 5. The unexpanded spheres contain volatile, liquid blowing agents which are vaporized on heating. These blowing agents can for example be freons such as trichlorofluoromethane, hydrocarbons such as n-pentane, i-pentane, neo-pentane, butane, i-butane or other blowing agents conventionally used for this type of microspheres. The blowing agent may suitably make up 5 to 30 percent by weight of the weight of the microspheres. Expancel® is an example of a suitable, commercially available microsphere product which has a thermoplastic shell of a vinylidene/acrylonitrile copolymer and contains iso-butane as a blowing agent.

Expanded microspheres can be produced from unexpanded spheres according to several known methods. One way of drying and expanding the spheres at the same time is known from U.S Pat.No. 4,397,799. A dispersion of unexpanded spheres in an inert liquid is atomized and the atomized dispersion is brought into contact with a hot flow of inert gas. From an economical point of view it is most favourable to use water as inert liquid and air as inert gas.

One drawback with this known process is that there can be a risk of dust explosion, depending on the required high temperature. This explosion may be so violent that the drying/expansion plant is destroyed.

It has now been found that the risk of dust explosion can be eliminated by increasing the content of water vapour in the drying/expansion plant. The present invention, as disclosed in the claims, offers a way of drying and expanding expandable thermoplastic microspheres by finely dividing a water suspension of unexpanded microspheres into fine droplets in a drying/expansion plant. A flow of hot air having a sufficiently high temperature for drying and expanding the microspheres is brought to the plant. The content of water vapuor in the plant is increased by external addition of water vapour. Preferably the content of water vapour is adjusted to a value exceeding the value at which dust explosion occurs. If no measures are taken to regulate the content of water vapour in the plant, this normally is about 4 - 7 per cent by volume water vapour, depending on the temperature difference in the entering and outgoing air. At these values there is a risk of dust explosion. At an increasing content of water vapour the risk of dust explosion decreases, to completely disappear at a certain limit value. With external addition of water vapour is meant intentional addition of water vapour to the plant to increase the content of water vapour to a value above that which is obtained at normal running of the plant.

The content of water vapour is dependent of the amount of microspheres in the drying/expansion plant. A suitable value can be determined by simple tests. Thus expanded microspheres can e. g. be mixed with air in a pressure chamber. The air in the chamber is heated, for example with a heating wire, whereby a dust explosion is caused. By increasing the amount of water vapour in the air, the limit value, when no dust explosion occurs, can be measured. The tests can then be repeated with other amounts of microspheres in the chamber, to obtain the limit values for the contents of microspheres which are of interest. Performed tests have shown that the limit value for the content of water vapour in the drying/expansion plant, expressed as per cent by volume of the air, is at least about 7 per cent of the numerical value for the content of expanded microspheres in $g/m^3$ air in the drying/expansion plant.

The content of water vapour in the drying/expansion plant can be increased in many ways. Water vapour can be added to the plant from the outside. It is also possible to heat the drying air to an extra high temperature and then inject atomized water which will be vaporized and give a sufficiently high content of water vapour in the air entering the plant. However, this latter method results in increased energy costs. Recirculation of a part of the outgoing drying air from the plant is a favourable way of increasing the content of water vapour in the plant. This is a preferred embodiment of the invention. By recirculation it is possible to raise the content of water vapour above the value which is necessary to eliminate the risk of dust explosion. By recirculation it is possible to raise the content to between 15 and 30 per cent by volume and even above 30 per cent by volume. Usually a value above 30 per cent by volume is less interesting as the risk of dust explosion has ceased already at about 15 per cent by volume.

Surprisingly it has been shown that despite a fairly high content of water vapour in the drying air according to the present process the final, expanded product becomes as dry as when the drying is performed with the process without increased content of water vapour.

The increase of the content of water vapour in the drying air also results in an increased drying capacity. That depends on the fact that the water vapour has a significantly higher heat capacity than air. Therefore the content of water vapour can be increased to above 30 per cent by volume if highest possible drying capacity is required. The upper limit for the content of water vapour is determined from the content at which the spheres no longer will become sufficiently dry. An acceptable moisture content for the expanded spheres is maximum 1 per cent, preferably lower than 0.8 per cent. The economy of the drying is also improved by applying the process with recirculation of the drying air.

An increased content of water vapour in the drying air results in a raised dew point, thereby risking condensation in parts of the set of apparatus. However, condensation can be avoided by a sufficient degree of heat isolation.

Suitably the process according to the invention is carried out by atomizing a water suspension of unexpanded microspheres and the atomized suspension is contacted with a stream of hot air. The solid content of the suspension, that is the content of microspheres, can be varied within wide limits and it has been shown suitable to work with suspensions with a solid content of between 25 and 50, preferably 35 and 45 per cent. The temperature of the suspension is not critical and can vary within wide limits, for example between the surrounding temperature (room temperature) and the temperature at which the suspension is made. Nor is the temperature of the entering air critical in respect of the risk of overexpansion of the microspheres as the purpose of the entering air during the first phase of the drying/expansion process is to vapourize the water. The temperature and the amount of the continuously fed air are chosen with consideration to the temperature and solid content of the suspension in such a way that at the second phase of the course, that is the expansion phase, the temperature of the air surrounding the microspheres does not exceed 180°C. Suitably the temperature of the air during the expansion phase should vary between 80 and 150, preferably between 90 and 120°C. The temperature of the entering air can vary between 140 and 350, preferably between 250 and 320 and especially between 260 and 310 °C. If the temperature during the expansion phase exceeds 180°C the microspheres will overexpand and collapse. A suitable way of regulating the expansion temperature to vary within the specified limits is to regulate the amount of the entering suspension with the aid of the pump feeding the suspension. The atomization of the suspension can be carried out in a so called atomizer or other means for finely dividing the suspension, such as one or more spraying disks or nozzles.

Suitably the invention is carried out in an elongated device, preferably in the form of a tube. In one end of the device there are means for finely dividing the dispersion of microspheres and water and an inlet for entering hot air. In the other end of the device there is an outlet for outgoing air containing expanded microspheres, which outlet is connected to a collecting device for the expanded microspheres. A part of the outgoing air is brought back to the inlet for hot air after the microspheres have been separated from the air. The degree of recirculation, that is the part of the outgoing drying air that is recirculated, is adjusted to a value at which the content of water vapour in the drying/expansion plant will be above the limit value for dust explosion at the content of microspheres in question. The value for the degree of recirculation is determined depending on the moisture content required in the plant and the moisture content of the outgoing drying air. The value for the degree of recirculation can be determined by simple tests in each separate case. The upper limit for the degree of recirculation is determined depending on the required solid content for the expanded microspheres. At a too high recirculation an unsatisfactory dry content in the spheres can be obtained. A conventional spray drier is a preferred device for carrying out the process according to the invention.

The heating of the drying air can be made in an electric battery. The drying air can also be heated by combustion of gas, oil or other combustibles. In the latter case the combustion gases can be brought directly to the drier in mixture with recirculated air and any fresh air. As the content of oxygen in the gas mixture entering the drier is further reduced by this process, an extra safety margin with respect to the occurrence of dust explosion is obtained.

The invention is now described by the following examples:

Example 1:

Dust explosion test

Thermoplastic microspheres in expanded form with a density of 36 kg/m³ were mixed with air at 80°C to a concentration of 200 g microspheres per m³ air in a pressure resistant chamber. The microspheres were made of a copolymer of vinylidene chloride and acrylonitrile. As blowing agent in the microspheres isobutane was used. In the pressure chamber there was a heating filament, which was heated to glowing by sending an electric current through it. A strong dust explosion was obtained a few seconds after the heating of the heating filament.

A series of measurements was carried out with mixtures of water vapour and air in different proportions, 5-30 per cent by volume of water vapour based on the water vapour/air mixture. The concentration of expanded microspheres in the gas mixture was the same as above in each test. The dust explosions became weaker and weaker at an increasing content of water vapour, and at 15 per cent of water vapour and higher no dust explosion at all was obtained.

The series of measurements was repeated, but the water vapour was replaced by nitrogen. The content of nitrogen had to be increased to minimum 23 per cent to avoid dust explosion. Thus water vapour is more effective than nitrogen to avoid dust explosion.

A series of test was also carried out where the concentration of expanded microspheres was varied between 100 and 270 g/m³ air. At each concentration of microspheres the lowest concentration of water vapour necessary to avoid dust explosion was determined. The following results were obtained:

| Conc. of micro spheres g/m³ air (A) | Limit value water vapour conc. vol.% (B) | B as % of A |
| --- | --- | --- |
| 100 | 7 | 7 |
| 140 | 12 | 8.6 |
| 200 | 15 | 7,5 |
| 220 | 17 | 7,7 |
| 270 | 20 | 7.4 |

Drying/expansion test

Example 2:

Comparative test

A water suspension of unexpanded microspheres with a solid content of 44 per cent by weight was pumped to a spray drier where the suspension was finely divided into small droplets with a quickly rotating spraying disk. The cloud of fine droplets was mixed with a current of air of 300° C in the drying chamber. The air leaving the chamber had a temperature of 110° C. The density of the product leaving the drying/expansion plant was 36 kg/m³. The moisture content was 0.7 %. The content of water vapour in the air in the drier was 6.5 per cent by volume. The concentration of expanded microspheres in the drier was determined in different places by taking samples with a test probe. The concentration varied between 50 - 170 g of expanded microspheres/m³ air. The concentration was at the highest in the periphery of the drier. A content of water vapour of about 15 per cent by volume will avoid dust explosion as is evident from example 1. Thus, the available content of 6.5 per cent by volume leads to a risk of dust explosion in the drier.

If the test conditions are changed and the change results in that the content of microspheres exceeds 200 g spheres/m³ in any spot in the drier, the content of water vapour in the drier must be increased so much that no dust explosion will take place. If it should be found that the concentration of microspheres in the drier is much lower, there is a choice of lowering the concentration of water vapour according to example 1.

Example 3:

A test with partial recirculation of the drying gas

The test conditions were as in example 2, but a varying part of the drying air was brought back to the air inlet of the drying plant.

The part of the gas flow which was recirculated is indicated as the degree of recirculation. In a series of tests the degree of recirculation was varied from 0 to 82 per cent. The following results were obtained:

| Test | Degree of recircul. % | Cont. of water vap. in drier vol. % | Density micro sph. kg/m³ *) | Cont. of moisture in micro sph. *) |
| --- | --- | --- | --- | --- |
| a) | 0 | 6,5 | 34 | 0.7 |
| b) | 45 | 12 | 33 | 0.6 |
| c) | 60 | 17 | 33 | 0.7 |
| d) | 75 | 23 | 34 | 0.7 |
| e) | 82 | 30 | 33 | 0.6 |

*) = Expanded microspheres

The drying and expansion of the microspheres proceeded satisfactory in all tests. The moisture content of the dried product was low and the degree of expansion of the microspheres measured as density was at a normal level, about 34 kg/m³.

The drying capacity was increased when the drying gas was partly recirculated despite the same flow of drying gas and the same adjustment of temperature. At a degree of recirculation of 75 - 82 % the increase of the capacity was between 30 and 40 % higher compared with test a).

**Claims**

1. A process for drying and expanding expandable thermoplastic microspheres by finely dividing a water suspension of unexpanded micro spheres into small droplets in a drying/expansion plant to which a

EP 0 320 473 A1

flow of hot air is brought, which has a sufficiently high temperature for drying and expanding the microspheres, characterized in that the content of water vapour in the drying/expansion plant is increased by external addition of water vapour.

2. A process according to claim 1, characterized in that the content of water vapour in the plant is increased to a value exceeding the limit value at which dust explosion occurs.

3. A process according to claim 2, characterized in that the limit value for the content of water vapour, expressed as per cent by volume of the air, exceeds 7 per cent of the numerical value for the content of expanded microspheres in $g/m^3$ air.

4. A process according to claim 1, characterized in that the content of water vapour in the drying/expansion plant is increased by recirculation of a part of the outgoing drying air.

5. A process according to claim 1, characterized in that the content of water vapour in the drying/expansion plant is at least 15 per cent by volume.

6. A process according to claim 5, characterized in that the content of water vapour is between 15 and 30 per cent by volume.

7. A process according to claim 1, characterized in that the flow of air to the drying/expansion plant is heated by mixing with hot combustion gases from the combustion of gas, oil or other combustibles.

5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 112 807 (KEMANORD) <br> * Page 4, lines 3-6; page 5, lines 4-9,35-39; page 6, lines 21-28; page 8, lines 30-39; page 9, lines 1-13 * <br> --- | 1,3,5,6 | C 08 J 9/32 <br> B 01 J 13/02 <br> C 08 J 9/22 |
| A | EP-A-0 056 219 (KEMANORD) <br> * Page 2, lines 31-35; page 3, lines 3-7; page 4, lines 18-39 * & US-A-43 97 799 (Cat.D) <br> --- | 1 | |
| A | FR-A-1 197 350 (BADISCHE ANILIN- AND SODA-FABRIK) <br> * Page 2, left-hand column, paragraph 2 * <br> ----- | 1 | |

TECHNICAL FIELDS SEARCHED (Int. Cl.4)

C 08 J
B 01 J

The present search report has been drawn up for all claims

| Place of search | Date of completion of the search | Examiner |
|---|---|---|
| THE HAGUE | 13-03-1989 | KERRES P.M.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P0401)